Europäisches Patentamt

European Patent Office

Office européen des brevets

(11) Publication number: 0 189 422
B1

# EUROPEAN PATENT SPECIFICATION

(45) Date of publication of patent specification: 16.08.89

(51) Int. Cl.⁴: G 01 N 27/26

(21) Application number: 85901738.6

(22) Date of filing: 12.03.85

(86) International application number:
PCT/US85/00408

(87) International publication number:
WO 85/04252 26.09.85 Gazette 85/21

(54) ELECTROPHORETIC TECHNIQUE FOR SEPARATING HEMOGLOBIN VARIANTS AND ELECTROPHORETIC GEL FOR USE THEREIN.

(30) Priority: 12.03.84 US 588849

(43) Date of publication of application:
06.08.86 Bulletin 86/32

(45) Publication of the grant of the patent:
16.08.89 Bulletin 89/33

(84) Designated Contracting States:
BE DE FR GB

(56) References cited:
WO-A-82/02500
AU-A- 535 900
US-A-4 417 415

(73) Proprietor: BECKMAN INSTRUMENTS, INC.
Executive Office 2500 Harbor Boulevard Box 3100 ·
Fullerton California 92634 (US)

(72) Inventor: ULFELDER, Kathi, J.
408 E. Civic Center Drive
Santa Ana, CA 92701 (US)
Inventor: GURSKE, William, A.
907 Williams Avenue
Placentia, CA 92670 (US)

(74) Representative: Arthur, John William et al
FITZPATRICKS 4 West Regent Street
Glasgow G2 1RS Scotland (GB)

Courier Press, Leamington Spa, England.

## Description

Background of the Invention

1. Field of the Invention

The instant invention pertains to an electrophoretic technique for separating hemoglobin variants and to an electrophoretic gel for use therein.

2. Description of the Prior Art

Electrophoretic techniques for separating heloglobin variants and electrophoretic gels for use therein are well known to those skilled in the art (1—4). In general, electrophoretic gels employed for separating heloglobin variants are of the type comprising an agar and a buffer having a pH of from about 6 to about 6.5, the buffer being selected from a group consisting of citrate and ethylenediaminetetraacetic acid (EDTA).

Unfortunately, citrate and EDTA possess several disadvantages. For example, citrate and EDTA exhibit pH drift over time. Therefore, neither citrate nor EDTA can be used in the form of stock solutions capable of storage at room temperature but must either be made fresh or be refrigerated.

Accordingly, it would be vry desirable to have a buffer for use in an electrophoretic technique for the separation of hemoglobin variants wherein one or more of the above mentioned problems are either alleviated or removed.

Summary of the Invention

In accordance with the present invention there is provied an electrophoretic technique for separating heloglobin variants wherein one or more of the above mentioned problems are either alleviated or removed. The electrophoretic technique of this invention is of the type wherein (a) at least one sample to be assayed is applied to an electrophoretic gel; (b) the electrophoretic gel of step (a) is electrophoresed; (c) the electrophoresed gel of step (b) is fixed; and (d) the fixed electrophoretic gel of step (c) is dried. The improved electrophoretic technique of the instant invention is characterized in that a novel electrophoretic gel is empoyed therein. The novel electrophoretic gel is of the type which comprises (a) at least one marine hydrocolloid processed from the class Rodophycea; and (b) a buffer. The electrophoretic gel is characterized in that the buffer (i) is selected from a group consisting of adipic acid, glutaric acid, itaconic acid, maleic acid, malic acid, malonic acid, succinic acid, succonamic acid, and tricarbalyllic acid and (ii) is present in a concentration of about 0.05 to about 0.09 M. The presence of this type of buffer in the electrphoretic gel enables one to alleviate or remove at least one of the above-mentioned problems.

Still other features and attendant advantages of the present invention will become apparent to those skilled in the art from a reading of the following detailed description of the preferred embodiments.

Description of the Preferred Embodiments

Preferably, the buffer is present in a concentration of about 0.06 to about 0.08 M.

Marine hydrocolloids processed from the class Rodophycea include, but are not limited to, agar, agarose, furcellaran, and carrageenan. Preferably the marine hydrocolloids employed in this invention are selected from a group consisting of agar and mixtures of agar and agarose. The agarose can be either low electroendosmosis agarose, medium electroendosmosis, or high electroendosmosis agarose. More preferably, the agarose is low electroendosmosis agarose.

The electrophoretic gel of the instant invention can optionally further comprise a preservative agent. Typical preservative agents include, but are not limited to, antibiotics, halogenated organic compounds, and inorganic compounds. Readily available preservative agents capable of use herein are sodium azide and ethylmercurithiosalicylic acid, sodium salt.

The electrophoretic gel of the instant invention can also optionally contain an alkylpolyol having 2 to 6 carbon atoms and 2 to 4 hydroxyl groups. Suitable alkylpolyols which can be used herein include, but are not limited to, ethylene glycol, propanediol, butanediol, pentanediol, and glycerol. Preferably, the alkylpolyol has 2 to 4 carbon atoms.

The exact concentrations of the various constituents employed in the electrophoretic gel of the present invention are not critical. However, the electrophoretic gel of the instant invention preferably comprises from about 0.3 to about 1.2 percent low electroendosmosis agarose; from about 0.3 to about 1.2 percent agar; an effective amount of the preservative agent; and a stabilizing amount of the alkyl polyol. More preferably, the electrophoretic gel of the instant invention comprises from about 0.4 to about 1 percent low electroendosmosis agarose; and from about 0.45 to about 1 percent agar. Optimally, the electrophoretic gel of the instant invention comprises about 0.5 percent low electroendosmosis agarose; about 0.5 percent agar; about 0.01 percent ethylmereurithiosalicylic acid, sodium salt; 5 percent 1,2-propanediol and about 0.05 M buffer comprising 0.2 percent maleic acid and about 1 percent maleic aicd, disodium salt.

The electrophoretic gels of the instant invention can be prepared via any technique well known to those skilled in the art. In general, the gel solution is prepared by mixing the various ingredients present therein while heating the mixture to a temperature of about 80 to about 100°C. The electrophoretic gel can be prepared by either standard molding or casting techniques. The gels can be stored at any convenient temperature, for example from about 2° to about 40°C, preferably from about 18° to about 26°C. It is preferred to store the electrophoretic gels in sealed, plastic trays until ready for use.

Samples can be applied to the electrophoretic gels of the instant invention via any technique used in the prior art, e.g., via a microliter syringe. The electrophoretic gels can be electrophoresed at 50 volts for 30 minutes. If desired, the gels can be fixed in an alcohol:acetic acid mixture such as 60 percent reagent alcohol, 30 percent deionized water, and 10 percent glacial acetic acid. In addition, the gels can optionally be dried at about 80 to about 90°C.

The following examples are provided for the purpose of further illustration only and are not intended to be limitations on the disclosed invention as claimed.

Examples 1—9

Gels comprising 0.5% low electroendosmosis agarose, 0.5% Difco Laboratories Bacto-agar brand agar, 0.1% sodium azide, and 5% 1,2-propanediol were prepared. Each gel also employed a 0.05 M concentration of a buffer set forth in Table I.

TABLE I

| Example | Buffers Within Scope of Invention | Prior Art Buffers |
|---|---|---|
| 1 | itaconic acid | |
| 2 | maleic acid | |
| 3 | malic acid | |
| 4 | malonic acid | |
| 5 | succinic acid | |
| 6 | succinamic acid | |
| 7 | tricarbalyllic acid | |
| 8 | | citrate |
| 9 | | EDTA |

The following electrophoretic procedure was employed.

1. Fill each side of an electrophoretic cell with 45 ml of 0.05 M buffer.

2. Gently blot surface of gel with a gel blotter. Align template on gel surface. Pepet 5 l of sample hemolysate having a 2 g/dl hemoglobin concentration onto each sample slot. Wait 5 minutes after last sample is applied, and remove excess sample with template blotter. Discard blotter. Remove and discard template.

3. Place gel onto gel bridge and into electrophoresis cell, matching + and − on bridge with those on the gel. Cover and guide into power supply.

4. Electrophoresis at 50 volts for 35 minutes.

5. Upon completion of electrophoresis, remove gel from the electrophoretic cell and placve in gel frame, then in gel holder.

6. Place in fixative solution for 5 minutes.

7. Remove from fixative solution and dry at 70°C. for about 20 minutes.

8. Place dry gel in an 8-amino-7-(3-nitrophenylazo)-2-(phenylazo)-1-naphththol-3,6-disulfonic acid disodium salt blue stain for about 3 minutes.

9. Destain for about 3 minutes.

10. Dry for about 5 minutes.

11. Visually observe patterns.

Succinamic acid and tricarbalyllic acid yielded an Hb A and F separation comparable to that of citrate and intaconic acid, maleic acid, malic acid, malonic acid, and succinic acid yield better Hb A and F separation than obtained with citrate. Furthermore, unlike citrate and EDTA, all of the buffers within the scope of this invention, with the exception of succinic acid, exhibited satisfactory shelf like when stored at room temperature, i.e., exhibited neither bacterial growth nor drift in pH over a period in excess of 4 months.

Based on this disclosure, many other modifications and ramifications will naturally suggest themselves to those skilled in the art. These are intended to be within the scope of this invention as claimed.

# EP 0 189 422 B1

Bibliography

1. Gratzer et al., *J. of Chromatography, 5*: 315—329 (1961).
2. Robinson et al., *J. Lab & Clin. Med., 50*: 645—752 (1957).
3. Barwick et al., *Biochimica et Biophysica Acta, 668*: 485—429 (1981).
4. Schmidt et al., "Basic Laboratory Methods of Hemoglobinopathy Detection", HEW Pub. No. (CDC) 78—8266 (1974).

## Claims

1. An electrophoretic gel of the type comprising:

(a) at least one marine hydrocolloid processed from the class *Rodophycea*, and

(b) a buffer, characterized in that said buffer (1) is selected from a group consisting of adipic acid, glutaric acid, itaconic acid, maleic acid, malic acid, malonic acid, succinic acid, succinamic acid, and tricarbalyllic acid and (ii) is present in a concentration of about 0.05 to about 0.09 M.

2. The electrophoretic gel of claim 1 further comprising an effective amount of preservative agent.

3. The electrophoretic gel of claim 1 further comprising a stabilizing amount of alkylpolyol having 2 to 6 carbon atoms and 2 to 4 hydroxyl groups.

4. The electrophoretic gel of claim 1 further comprising:

(a) an effective amount of a preservative agent; and

(b) a stabilizing amount of an alkylpolyol having 2 to 6 carbon atoms and 2 to 4 hydroxyl groups.

5. The electrophoretic gel of claim 1 wherein said buffer is present at a concentration of about 0.06 to about 0.08M.

6. The electrophoretic gel of claim 1 wherein said marine hydrocolloid is selected from a group consisting of agar and mixtures of agar and agarose.

7. The electrophoretic gel of claim 6 further comprising an effective amount of a preservative agent.

8. The electrophoretic gel of claim 6 further comprising a stabilizing amount of an alkylpolyol having 2 to 6 carbon atoms and 2 to 4 hydroxyl groups.

9. The electrophoretic gel of claim 6 further comprising:

(a) an effective amount of a preservative agent; and

(b) a stabilizing amount of an alkylpolyol having 2 to 6 carbon atoms and 2 to 4 hydroxyl groups.

10. The electrophoretic gel of claim 6 wherein said buffer is present at a concentration of about 0.06 to about 0.08M.

11. The electrophoretic procedure of the type comprising:

(a) applying at least one sample to a gel;

(b) electrophoresing said gel of step (a);

(c) fixing said electrophoresed gel of step (b); and

(d) drying the fixed gel of step (c); and wherein the gel is said electrophoretic gel of claim 1.

12. The electrophoretic procedure of claim 11 wherein said gel further comprises an effective amount of a preservative agent.

13. The electrophoretic procedure of claim 11 wherein said gel further comprises a stabilizing amount of an alkylpolyol having 2 to 6 carbo atoms and 2 to 4 hydroxyl groups.

14. The electrophoretic procedure of claim 11 wherein said gel further comprises:

(a) an effective amount of a preservative agent; and

(b) a stabilizing amount of an alkylpolyol having 2 to 6 carbon atoms and 2 to 4 hydroxyl groups.

15. The electrophoretic procedure of claim 11 wherein said buffer is present at a concentration of about 0.06 to about 0.08M.

16. The electrophoretic procedure of claim 11 wherein said marine hydrocolloid is selected from a group consisting of agar and mixtures of agar and agarose.

17. The electrophoretic procedure of claim 16 wherein said gel further comprises an effective amount of a preservative agent.

18. The electrophoretic procedure of claim 16 wherein said gel further comprises a stabilizing amount of an alkylpolyol having 2 to 6 carbon atoms and 2 to 4 hydroxyl groups.

19. The electrophoretic procedure of claim 16 wherein said gel further comprises:

(a) an effective amount of a preservative agent; and

(b) a stabilizing amount of an alkylpolyol having 2 to 6 carbon atoms and 2 to 4 hydroxyl groups.

20. The electrophoretic procedure of claim 16 wherein said buffer is present at a concentration of about 0.06 to about 0.08M.

## Patentansprüche

1. Elektrophorese-Gel des Typs umfassend

(a) wenigstens ein behandeltes Meeres-Hydrocolloid aus der Klasse *Rodophycea*, sowie

(b) einen Puffer, dadurch gekennzeichnet, daß der Puffer (i) aus der Gruppe bestehend aus Adipinsäure, Glutarsäure, Itaconsäure, Maleinsäure, Äpfelsäure, Malonsäure, Bernsteinsäure, (Sukzinsäure), Sukzinamsäure (succinamic acid) und Tricarbalylsäure gewählt ist und (ii) in einer

EP 0 189 422 B1

Konzentration von etwa 0,05 bis etwa 0,09 M vorliegt.

2. Elektrophorese-Gel nach Anspruch 1, des weiteren umfassend eine wirksame menge eines Konservierungsmittels.

3. Elektrophorese-Gel nach Anspruch 1, des weiteren umfassend eine stabilisierende Menge an Alkylpolyol mit 2 bis 6 Kohlenstoffatomen und 2 bis 4 Hydroxylgruppen.

4. Elektrophorese-Gel nach Anspruch 1, des weiteren umfassend
(a) eine wirksame Menge eines Konservierungsmittels, sowie
(b) eine stabilisierende Menge eines Alkylpolyols mit 2 bis 6 Kohlenstoffatomen und 2 bis 4 Hydroxylgruppen.

5. Elektrophorese-Gel nach Anspruch 1, bei welchem der genannte Puffer in einer Konzentration von etwa 0,06 bis etwa 0,08 M vorliegt.

6. Elektrophorese-Gel nach Anspruch 1, bei welchem das Meeres-Hydrocolloid aus einer Gruppe bestehend aus Agar und Gemischen von Agar und Agarose gewählt ist.

7. Elektrophorese-Gel nach Anspruch 6, des weiteren umfassend eine wirksame Menge an einem Konservierungsmittel.

8. Elektrophorese-Gel nach Anspruch 6, des weiteren umfassend eine stabilisierende Menge eines Alkylpolyols mit 2 bis 6 Kohlenstoffatomen und 2 bis 4 Hydroxylgruppen.

9. Elektrophorese-Gel nach Anspruch 6, des weiteren umfassend
(a) eine wirksame Menge eines Konservierungsmittels; sowie
(b) eine stabilisierende Menge eines Alkylpolyols mit 2 bis 6 Kohlenstoffatomen und 2 bis 4 Hydroxylgruppen.

10. Elektrophorese-Gel nach Anspruch 6, bei welchem der genannte Puffer in einer Konzentration von etwa 0,06 bis etwa 0,08 M vorliegt.

11. Elektrophoreseverfahren des Typs umfassend
(a) Aufbringen wenigstens einer Probe auf ein Gel,
(b) Elektrophoresebehandlung des Gels aus Stufe (a),
(c) Fixieren des genannten Elektrophorese-Gels aus Stufe (b), sowie
(d) Trocknen des fixierten Gels aus Stufe (c), und wobei das Gel das genannte Elektrophoresegel aus Anspruch 1 ist.

12. Elektrophoreseverfahren nach Anspruch 11, bei welchem das Gel des weiteren eine wirksame Menge eines Konservierungsmittels enthält.

13. Elektrophoreseverfahren nach Anspruch 11, bei welchem das Gel des weiteren eine stabilisierende Menge eines Alkylpolyols mit 2 bis 6 Kohlenstoffatomen und 2 bis 4 Hydroxylgruppen umfaßt.

14. Elektrophoreseverfahren nach Anspruch 11, bei welchem das genannte Gel des weiteren umfaßt
(a) eine wirksame Menge eines Konservierungsmittels, sowie
(b) eine stabilisierende Menge eines Alkylpolyols mit 2 bis 6 Kohlenstoffatomen und 2 bis 4 Hydroxylgruppen.

15. Elektrophoreseverfahren nach Anspruch 11, bei welchem der genannte Puffer in einer Konzentration von etwa 0,06 bis etwa 0,08 M vorliegt.

16. Elektrophoreseverfahren nach Anspruch 11, bei welchem das Meeres-Hydrocolloid aus einer Gruppe bestehend aus Agar und Gemischen von Agar und Agarose gewählt ist.

17. Elektrophoreseverfahren nach Anspruch 16, bei welchem das genannte Gel des weiteren eine wirksame Menge eines Konservierungsmittels enthält.

18. Elektrophoreseverfahren nach Anspruch 16, bei welchem das genannte Gel des weiteren eine stabilisierende Menge eines Alkylpolyols mit 2 bis 6 Kohlenstoffatomen und 2 bis 4 Hydroxylgruppen umfaßt.

19. Elektrophoreseverfahren nach Anspruch 16, bei welchem das genannte Gel des weiteren umfaßt
(a) eine wirksame Menge eines Konservierungsmittels, sowie
(b) eine stabilisierende Menge eines Alkylpolyols mit 2 bis 6 Kohlenstoffatomen und 2 bis 4 Hydroxylgruppen.

20. Elektrophoreseverfahren nach Anspruch 16, bei welchem der genannte Puffer in einer Konzentration von etwa 0,06 bis etwa 0,08 M vorliegt.

**Revendications**

1. Gel électrophorétique du type comprenant:
(a) au moins un hydrocolloïde marin traité de la classe de *Rodophycea*, et
(b) un tampon, caractérisé en ce que ledit tampon (i) est choisi dans un groupe consistant en acide adipique, acide glutarique, acide itaconique, acide maléique, acide malique, acide malonique, acide succinique, acide succinamique, et acide tricarbalyllique et (ii) est présent à une concentration d'environ 0,05 à environ 0,09 M.

2. Gel électrophorétique selon la revendication 1, comprenant de plus une quantité efficace d'un agent conservateur.

3. Gel électrophorétique de la revendication 1, comprenant de plus une quantité stabilisante d'alkylpolyol ayant 2 à 6 atomes de carbone et 2 à 4 groupes hydroxyles.

5

4. Gel électrophorétique de la revendication 1, comprenant de plus:

(a) une quantité efficace d'un agent conservateur; et

(b) une quantité stabilisante d'un alkylpolyol ayant 2 à 6 atomes de carbone et 2 à 4 groupes hydroxyles.

5. Gel électrophorétique de la revendication 1 où ledit tampon est présent à une concentration d'environ 0,06 à environ 0,08 M.

6. Gel électrophorétique selon la revendication 1 où ledit hydrocolloïde marin est choisi dans un groupe consistant en agar et mélanges d'agar et d'agarose.

7. Gel électrophorétique de la revendication 6, comprenant de plus une quantité efficace d'un agent conservateur.

8. Gel électrophorétique de la revendication 6, comprenant de plus une quantité stabilisante d'un alkylpolyol ayant 2 à 6 atomes de carbone et 2 à 4 groupes hydroxyles.

9. Gel électrophorétique de la revendication 6, comprenant de plus:

(a) une quantité efficace d'un agent conservateur; et

(b) une quantité stabilisante d'un alkylpolyol ayant 2 à 6 atomes de carbone et 2 à 4 groupes hydroxyles.

10. Gel électrophorétique de la revendication 6 où ledit tampon est présent à une concentration d'environ 0,06 à environ 0,08 M.

11. Processus d'électrophorèse du type comprenant:

(a) l'application d'au moins un échantillon à un gel;

(b) l'électrophorèse dudit gel de l'étape (a);

(c) la fixation dudit gel ayant subi l'électrophorèse à l'étape (b); et

(d) le séchage du gel fixé à l'étape (c); et où le gel est ledit gel électrophorétique de la revendication 1.

12. Processus d'électrophorèse de la revendication 11 où ledit gel contient de plus une quantité efficace d'un agent conservateur.

13. Processus d'électrophorèse de la revendication 11 où ledit gel contient de plus une quantité stabilisante d'un alkylpolyol ayant 2 à 6 atomes de carbone et 2 à 4 groupes hydroxyles.

14. Processus d'électrophorèse de la revendication 11 où ledit gel contient de plus:

(a) une quantité efficace d'un agent conservateur; et

(b) une quantité stabilisante d'un alkylpolyol ayant 2 à 6 atomes de carbone et 2 à 4 groupes hydroxyles.

15. Processus d'électrophorèse de la revendication 11 où ledit tampon est présent à une concentration d'environ 0,06 à environ 0,08 M.

16. Processus d'électrophorèse de la revendication 11 où ledit hydrocolloïde marin est choisi dans le groupe consistant en agar et mélanges d'agar et d'agarose.

17. Processus d'électrophorèse de la revendication 16 où ledit gel contient de plus une quantité efficace d'un agent conservateur.

18. Processus d'électrophorèse de la revendication 16 où ledit gel contient de plus une quantité stabilisante d'un alkylpolyol ayant 2 à 6 atomes de carbone et 2 à 4 groupes hydroxyles.

19. Processus d'électrophorèse de la revendication 16 où ledit gel contient de plus:

(a) une quantité efficace d'un agent conservateur; et

(b) une quantité stabilisante d'un alkylpolyol ayant 2 à 6 atomes de carbone et 2 à 4 groupes hydroxyles.

20. Processus d'électrophorèse de la revendication 16 où ledit tampon est présent à une concentration d'environ 0,06 à environ 0,08 M.